# EUROPEAN PATENT SPECIFICATION

(11) **EP 0 570 145 B1**
(45) Date of publication and mention of the grant of the patent: **08.10.1997**
(21) Application number: 93303461.3
(22) Date of filing: 04.05.1993
(51) Int. Cl.: H04Q 7/34

(54) **A control circuit**
Steuerschaltung
Circuit de commande

(30) Priority: 05.05.1992 FI 922027
(43) Date of publication of application: 18.11.1993
(73) Proprietor: NOKIA MOBILE PHONES LTD., 24101 Salo (FI)
(72) Inventor: Ali-Vehmas, Timo, SF-24260 Salo (FI); Lonka, Pekka, SF-24240 Salo (FI)
(74) Representative: Frain, Timothy John

(56) References cited:
- EP-A- 0 091 281
- EP-A- 0 310 284
- EP-A- 0 439 319
- US-A- 4 509 201

## Description

The present invention relates to a control circuit for selectively deactivating a device.

The control circuit of the present invention is intended for use with devices which utilize user identity cards such as a subscriber identity module (SIM) suitable for use in mobile telephone systems such as the Group Special Mobile (GSM) system.

In terms of the specification of a GSM mobile telephone network, the mobile telephone is always provided with a space for inserting a user card. The user card contains the user data recorded in the memory of a microchip. With the help of the card data, the system identifies the person using the device, and finds the correct address for billing, among others. The mobile telephone may be equipped with a small, semi-stationary user card, which is rarely exchanged. However, a "SIM card" of the size of a credit card is likely to become more frequently used in mobile telephones. The correct position of the user card is typically detected by a member which stops the normal operation of the telephone if the card is removed.

As the user inserts the card in the mobile telephone and switches on the power, the mobile telephone first asks for the user code commonly known as Personal Identity Number (PIN). This is intended to ensure that stolen cards, for instance, cannot be used without the authorized users consent. A PIN code corresponding to the one of the card inserted in the telephone having been supplied by the user, the device will be ready for use, allowing the user to make several calls, even at long intervals, without having to provide the PIN code anew. However, this is only possible on the condition that the internal supply voltage of the mobile telephone is not interrupted. If the supply voltage of the mobile telephone in a GSM system is interrupted, the user has to feed the PIN code once again before being able to use the telephone.

Momentary supply voltage breaks may occur, for instance when the mobile telephone is connected to a car, the power being supplied from the accumulator voltage of the car. In many cars, the power supply to accessory devices is interrupted when the car is being started. In this case, the internal voltage of the mobile telephone is also interrupted, and the PIN code has to be fed once again before the telephone will be ready for use. In a portable telephone, the supply voltage may be interrupted, depending on the telephone design, when the voltage level drops below the reset point of the batteries, and the old battery of the telephone has to be replaced by a freshly charged battery. In such cases, the starting of the car or the exchange of the battery only takes about 30 seconds.

EP 0 310 284 discloses an automobile telephone device, in which a voltage monitoring unit (monitors the voltage of the battery. When the voltage falls near a limit voltage required for starting the automobile engine, the monitoring unit electrically interrupts a power source line connecting the battery and the telephone device via a proper switch circuit to thereby inhibit excessive consumption of the automobile battery by the automatic answering or receiving function during engine stoppage.

EP 0 439 319 discloses an automobile radio telephone apparatus capable of detecting a drop of power source voltage to prevent a telephone channel from being occupied wastefully and to thereby enhance efficient use of channels with regard to the operation of an automobile radio telephone system. When the power source voltage is lower than a predetermined voltage, the apparatus informs the user of such an occurrence. On the lapse of a predetermined period of time and if a conversation is under way, the apparatus warns the user that it will execute a forcible conversation ending procedure and then executes it.

EP 0 091 281 discloses a circuit arrangement for detecting restoration of a momentary interruption so that the previous operation can be continued.

US 4 509 201 discloses a wireless telephone apparatus having protection against power loss.

According to a first aspect of the present invention there is provided a control circuit for selectively deactivating a device, the control circuit comprising a Subscriber Identity Module (SIM) card receiver means which produces a first signal (Swa) when the SIM card is present and a second signal (Swb) when the SIM card is not present, coupled to a measurement circuit the magnitude of the output of the measurement circuit being dependent on the signal from the SIM card receiver means, such that if the first signal (Swa) is emitted by the SIM card receiver means the magnitude of the output from the measurement circuit is dependent on the duration of any interruption in the input voltage to the device and if the second signal (Swb) is emitted by the SIM card receiver means the magnitude of the output from the measurement circuit falls below a predetermined level, the measurement circuit being coupled to a deactivation means which deactivates the device if the magnitude of the signal from the measurement circuit falls below said predetermined level either because the SIM card is not present or because the duration of an interruption in the input voltage has exceeded a predetermined limit.

According to a second aspect of the present invention there is provided a method of determining whether a device should be deactivated comprising the steps of providing an output signal dependent on the duration of any interruption in the input voltage to the device and a signal from a Subscriber Identity Module (SIM) card receiver means, the SIM card receiver means emitting a first signal when a SIM card is present and a second signal when the SIM card is not present, such that the output signal decreases gradually if the input voltage is interrupted and the SIM card is present, and decreases rapidly if the SIM card is not present on the interruption of the input voltage to the device allowing the output signal to decrease on the reinstatement of the input voltage to the device, noting the magnitude of the output signal, waiting a predetermined time period and again noting the magnitude of the output signal, determining the difference in the magnitudes of the output signals measured and determining whether or not the device should be deactivated dependent upon said difference in magnitudes of the output signals.

An advantage of the invention is the elimination of the need for repeated inputting of the PIN codes caused by short voltage breaks.

The device is provided with members for detecting whether the user card has remained in its position during a short break of the supply voltage. If the user card has been removed from its position during the break, a signal is generated, and the PIN code is required once again. In an embodiment, the break duration is detected by a simple RC circuit, by measuring the voltage drop of the capacitor during the break, this being proportional to the break duration.

A switch member has been provided to discharge the capacitor as the user card is removed from its position.

An embodiment of the invention is described below, by way of example, with reference to the accompanying drawings, in which:
Figure 1 shows a preferred embodiment of a control circuit in accordance with the invention;
Figure 2a show the voltage curve of the capacitor controlled by the circuit of Figure 1, when the card remains in place during a short break; and
Figure 2b shows the voltage curve when the card has been removed during a short break.

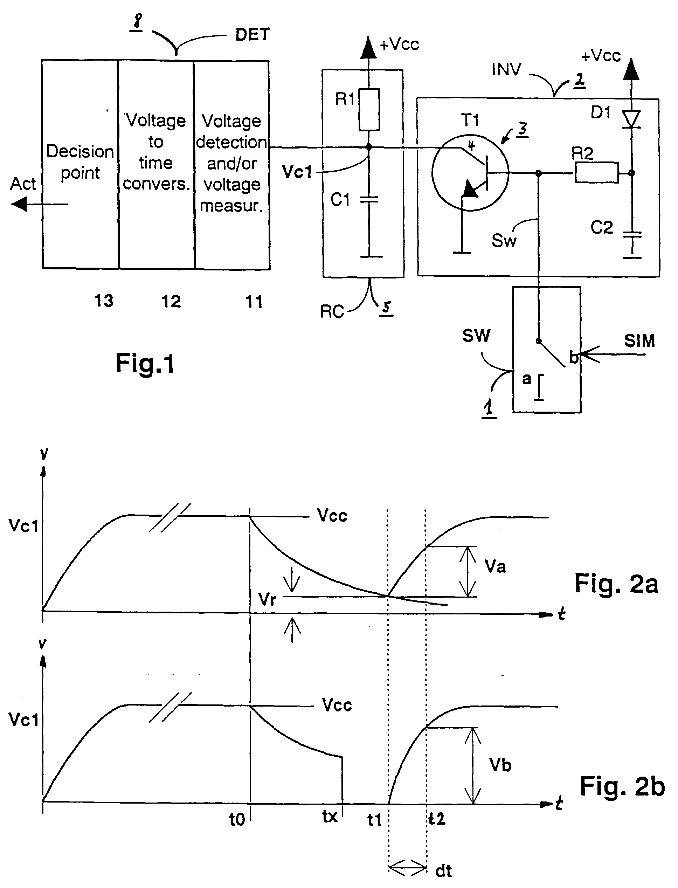

Figure 1 shows switch member 1 connected to the insertion space of a user card known per se, the switch member being closed, i.e. in position "a" when the SIM user card is inserted, and the switch 1 then generates an output signal Swa. In switch position "b", shown in the figure, the card has been removed and the switch generates output signal Swb. In addition, the control circuit comprises an inverter circuit 2 for the switch signal, which inverts output signal Swa or Swb. In this example, the inverter circuit has been accomplished with a simple transistor switch 3. The collector 4 of transistor 3 is connected to the centre of measurement circuit 5 between resistor R1 and capacitor C1. In terms of the invention, the RC circuit is used to measure the duration of the supply voltage break in the manner described below.

The voltage of capacitor C1 is detected with the member combination DET, which in the example given comprises a voltage detecting circuit 11, e.g. a comparator, which directly generates an activating signal, i.e. output signal Act. Optionally, circuit may comprise a voltage measuring circuit, e.g. a digital/analog converter. The output of circuit 11 may be taken to circuit 12, by means of which the voltage data are converted into time data, expressing the duration of the break. The output of the converting circuit is connected to terminal circuit 13, which generates output signal Act, if the detected duration of the break has exceeded a predetermined limit value tlim.

Figure 2a illustrates the operation of the circuit of figure 1. The figure shows voltage Vcl of capacitor C1 as a function of time. Starting from the left in figure 2a, one can see how the voltage of capacitor C1 increases to the approximate value +Vcc, the user card being inserted in the mobile telephone, and the supply voltage having been switched on. Output signal Swa of switch 1 is essentially zero and transistor T1 is not conductive, since voltage Vcc passes via diode D1 and resistor R2 directly into the ground. The capacitor voltage Vc1 remains approx. at value Vcc. At moment t0 the supply voltage is interrupted. Voltage Vc1 decreases exponentially corresponding to the time constant of circuit RC due to leakage currents. At moment t1, voltage Vcc is switched on again. As a result, Vc1 begins to increase, also exponentially, starting from residual value Vr. At the end of period dt voltage Vc1 is measured at moment t2. The length of period dt is predetermined. In terms of the figure, voltage value Va is obtained. Voltage Va is detected with circuit 11, which can be a comparator, voltage Vc1 being then compared with the limit value Vlim having been set. In this case Va is less than Vlim, and signal Act will not be generated.

Voltage value Va can optionally be converted into a digital value and then into a time value t0..,t1, i.e. (t1-t0), e.g. by making use of the processor capacity already existing in the mobile telephone. In this case, the time (t0...t1) is shorter than the set limit value, being for instance tlim = 30 s.

Figure 2b illustrates a situation, in which the SIM user card is removed or detached from the mobile telephone for the time of the voltage break at moment tx. In this connection the switch position is shifted into position b, signal Swb causing the transistor to be conductive on the socket approx. +Vcc, causing capacitor C1 to be discharged very rapidly. The voltage having been switched on again, voltage Vc1 is measured at the end of a period dt, yielding a value Vb, which is greater than the limit value. Detecting circuit generates activating signal Act. The situation illustrated in figure 2b arises again if period t0...t1 is very long, the capacitor having been discharged in the meantime. For this reason, the mobile telephone, when activated, asks for the PIN code, because the SIM card is supposed to have been exchanged.

After the enquiry about the PIN code, identification data and other information necessary for the use of the telephone are recorded into the memory of the mobile telephone processor when the correct code has been provided on the key-board, in others words, the operation starts from the beginning.

The limit value tlim (or Vlim) of the break being controlled may have a fixed length. The limit value tlim may, for example be between 15 and 60 seconds. The limit value can optionally be set on the basis of data obtained from the base station of the network, for instance with the aid of a "Radio Link Time Out" signal. In current system implementations, limit value tlim must be of the order of 30 seconds, equalling the longest resynchronization period in GSM networks.

Although a preferred embodiment of the invention has been described in detail above, a person skilled in the art will realize that modification may be made without departing from the scope of the present invention. For example, the operating positions a, b of switch SW could be inversed; this would require a different type of logic for the inverter circuit 2. Switch SW can of course be replaced by other means detecting the correct position of the SIM card.

The implementation of segments 11 to 13 is not described in detail here, given that exact implementation of these segments is not of vital importance for the invention.

The invention is advantageously applied to the mobile telephone of a GSM network, but is not confined to this system.

## Claims

1. A control circuit for selectively deactivating a device, the control circuit comprising a Subscriber Identity Module (SIM) card receiver means (1) which produces a first signal (Swa) when the SIM card is present and a second signal (Swb) when the SIM card is not present, coupled to a measurement circuit (5) the magnitude of the output of the measurement circuit being dependent on the signal from the SIM card receiver means (1), such that if the first signal (Swa) is emitted by the SIM card receiver means (1) the magnitude of the output from the measurement circuit (5) is dependent on the duration of any interruption in the input voltage to the device and if the second signal (Swb) is emitted by the SIM card receiver means (1) the magnitude of the output from the measurement circuit (5) falls below a predetermined level, the measurement circuit (5) being coupled to a deactivation means (8) which deactivates the device if the magnitude of the signal from the measurement circuit (5) falls below said predetermined level either because the SIM card is not present or because the duration of an interruption in the input voltage has exceeded a predetermined limit.

2. A control circuit as claimed in claim 1, wherein the measurement circuit (5) comprises a coupled resistor capacitor circuit (5) and the output signal of the measurement circuit (5) is the voltage (Vc1) of the capacitor (C1).

3. A control circuit as claimed in claim 1 or claim 2, comprising an inverter circuit (2) coupled between the measurement circuit (5) and SIM card receiver means (1), such that when the inverter circuit (2) receives the first signal (Swa) from the SIM card receiver means (1) it discharges the capacitor (C1) in the measurement circuit (5), thus reducing the capacitor voltage (Vc1) substantially to zero.

4. A control circuit as claimed in claim 3, wherein the inverter circuit (2) comprises a transistor (3) the collector terminal (4) of which is coupled to the measurement circuit (5) between the capacitor (C1) and the resistor (R1), the base of which is coupled to the SIM card receiver means (1), such that on receipt of the second signal (Swb) from the SIM card receiver means (1) the transistor (3) becomes conductive and the capacitor (C1) discharges through the transistor.

5. A control circuit as claimed in any previous claim, comprising a voltage comparator (11) in which the output voltage of the measurement circuit (5) is compared to a predetermined voltage to determine whether or not the device should be deactivated.

6. A control circuit as claimed in any previous claim, comprising a voltage to time converter circuit (12) in which the output of the measurement circuit (5) may be converted to a time period measurement corresponding to the duration for which the input voltage is interrupted.

7. A control circuit as claimed in any previous claim, wherein the predetermined duration limit is between 15 seconds and 60 seconds.

8. A control circuit as claimed in any previous claim, wherein the first (Swa) or second (Swb) signal from the SIM card receiver means (1) may be a zero signal.

9. A telephone comprising a control circuit as claimed in any previous claim.

10. A method of determining whether a device should be deactivated comprising the steps of:
providing an output signal (Vc1) dependent on the duration of any interruption in the input voltage to the device and a signal from a Subscriber Identity Module (SIM) card receiver means (1), the SIM card receiver means (1) emitting a first signal (Swa) when a SIM card is present and a second signal (Swb) when the SIM card is not present, such that the output signal (Vc1) decreases gradually if the input voltage is interrupted and the SIM card is present, and decreases rapidly if the SIM card is not present;
on the interruption (t0) of the input voltage to the device allowing the output signal (Vc1) to decrease;
on the reinstatement (t1) of the input voltage to the device, noting the magnitude of the output signal (Vc1);
waiting a predetermined time period (dt) and again noting the magnitude of the output signal (Vc1);
determining the difference in the magnitudes of the output signals measured; and
determining whether or not the device should be deactivated dependent upon said difference in magnitudes of the output signals.

## Patentansprüche

1. Steuerschaltung für das selektive Ausschalten eines Geräts, die mit SIM (Subscriber Identity Module)-Karten Aufnahmemitteln (1) ausgestattet ist, welche bei aufgenommener SIM-Karte ein erstes Signal (Swa) und bei nicht aufgenommener SIM-Karte ein zweites Signal (Swb) erzeugen, und die mit einem Meßkreis (5) gekoppelt sind, dessen Amplitude am Ausgang von dem Signal der SIM-Karten- Aufnahmemittel (1) derart abhängt, daß bei dem ersten von den SIM-Karten-Aufnahmemitteln (1) erzeugten Signal (Swa) die Amplitude des Signals am Ausgang des Meßkreises (5) von der Dauer irgendeiner Unterbrechung der Eingangsspannung des Geräts abhängt, und daß bei dem zweiten von den SIM-Karten-Aufnahmemitteln (1) erzeugten Signal (Swb) die Amplitude am Ausgang des Meßkreises (5) unter einen vorbestimmten Pegel fällt, wobei der Meßkreis (5) mit Deaktivierungsmitteln (8) gekoppelt ist, die das Gerät ausschalten, falls die Amplitude des Signals von dem Meßkreis (5) unterhalb des vorbestimmten Pegels liegt, entweder weil die SIM-Karte nicht aufgenommen ist, oder weil die Unterbrechungsdauer der Eingangsspannung einen vorbestimmten Grenzwert überschritten hat.

2. Steuerschaltung nach Anspruch 1, bei der der Meßkreis (5) eine gekoppelte Widerstands-Kondensatorschaltung (5) enthält, und das Ausgangssignal des Meßkreises (5) gleich der Spannung (Vc1) des Kondensators (C1) ist.

3. Steuerschaltung nach Anspruch 1 oder 2, mit einer Inverterschaltung (2), die den Meßkreis (5) mit den SIM-Karten-Aufnahmemitteln (1) derart koppelt, daß die Inverterschaltung (2) beim Empfang des ersten Signals (Swa) von den SIM-Karten-Aufnahmemitteln (1) den Kondensator (C1) im Meßkreis (5) entlädt, wodurch die Kondensatorspannung (Vc1) im wesentlichen Null wird.

4. Steuerschaltung nach Anspruch 3, bei der die Inverterschaltung (2) einen Transistor (3) enthält, dessen Kollektoranschluß (4) über einen gemeinsamen Verbindungspunkt des Kondensators (C1) und des Widerstands (R1) mit dem Meßkreis (5) und dessen Basis mit den SIM-Karten-Aufnahmemitteln (1) derart gekoppelt sind, daß beim Empfang des zweiten Signals (Swb) von den SIM-Karte-Aufnahmemitteln (1) der Transistor (3) leitend wird, wodurch sich der Kondensator (C1) über den Transistor entlädt.

5. Steuerschaltung nach irgendeinem der vorangegangenen Ansprüche, mit einem Spannungs-Komparator (11), der die Ausgangsspannung des Meßkreises (5) mit einem vorbestimmten Spannungswert vergleicht, um festzustellen, ob das Gerät ausgeschaltet sein soll oder nicht.

6. Steuerschaltung nach irgendeinem der vorangegangenen Ansprüche, mit einer Spannungs-Zeit-Wandlerschaltung (12), die korrespondierend zur Unterbrechungsdauer der Eingangsspannung das Ausgangssignal des Meßkreises (5) in ein Zeitperiodenmaß wandelt.

7. Steuerschaltung nach irgendeinem der vorangegangenen Ansprüche, bei der die vorbestimmte Zeitdauergrenze zwischen 15 und 60 Sekunden liegt.

8. Steuerschaltung nach irgendeinem der vorangegangenen Ansprüche, bei der das erste (Swa) oder das zweite (Swb) Signal von den SIM-Karten-Aufnahmemitteln (1) den Wert Null aufweisen können.

9. Telefon mit einer Steuerschaltung nach irgendeinem vorangegangenen Anspruch.

10. Verfahren zur Bestimmung ob ein Gerät deaktiviert werden soll, mit folgenden Schritten:
Bildung eines Ausgangssignals (Vc1) in Abhängigkeit von der Dauer irgendeiner Unterbrechung der Eingangsspannung eines Geräts und Bildung eines Signals in den SIM (Subscriber Identity Module)-Karten-Aufnahmemitteln (1), wobei die SIM-Karten-Aufnahmemittel (1) bei aufgenommener SIM-Karte ein erstes Signal (Swa) und bei nicht aufgenommener SIM-Karte ein zweites Signal (Swb) liefern, so daß das Ausgangssignal (Vc 1) bei unterbrochener Eingangsspannung und aufgenommener SIM-Karte allmählich und bei nicht aufgenommener SIM-Karte schnell abnimmt,
Abnahme des Ausgangssignals (Vc1) bei Unterbrechung der Eingangsspannung zum Zeitpunkt (t0),
Speicherung der Amplitude des Ausgangssignals (Vc1) bei Wiedereinsetzen der Eingangsspannung für das Gerät zum Zeitpunkt (t1);
Abwarten einer vorbestimmten Zeitdauer (dt), um dann erneut die Amplitude des Ausgangssignals (Vc1) zu speichern;
Differenzbildung der Amplituden der gemessenen Ausgangssignale; und
Bestimmung ob das Gerät deaktiviert werden soll, und zwar in Abhängigkeit von der Differenz der Amplituden der Ausgangssignale.

## Revendications

1. Circuit de commande pour désactiver sélectivement un dispositif, le circuit de commande comprenant un moyen de récepteur de carte (1) de Module d'Identité d'Abonné (SIM) qui produit un premier signal (Swa) lorsque la carte SIM est présente et un second signal (Swb) lorsque la carte SIM n'est pas présente, couplé à un circuit de mesure (5), l'amplitude de la sortie du circuit de mesure étant fonction du signal provenant du moyen récepteur de carte SIM (1), d'une manière telle que si le premier signal (Swa) est émis par le moyen récepteur de carte SIM (1), l'amplitude de la sortie provenant du circuit de mesure (5) est fonction de la durée de toute interruption de la tension d'entrée au dispositif et si le second signal (Swb) est émis par le moyen récepteur de carte SIM (1) l'amplitude de la sortie du circuit de mesure (5) tombe au-dessous d'un niveau prédéterminé, le circuit de mesure (5) étant couplé à un moyen de désactivation (8) qui désactive le dispositif si l'amplitude du signal provenant du circuit de mesure (5) tombe au-dessous dudit niveau prédéterminé, soit du fait que la carte SIM n'est pas présente, soit du fait que la durée d'une interruption de la tension d'entrée a dépassé une limite prédéterminée.

2. Circuit de commande selon la revendication 1, dans lequel le circuit de mesure (5) comprend un circuit à résistance et condensateur couplés (5) et le signal de sortie du circuit de mesure (5) est la tension (Vcl) du condensateur (C1).

3. Circuit de commande selon la revendication 1 ou la revendication 2, comprenant un circuit inverseur (2) couplé entre le circuit de mesure (5) et le moyen récepteur de carte SIM (1) d'une manière telle que lorsque le circuit inverseur (2) reçoit le premier signal (Swa) provenant du moyen récepteur de carte SIM (1), il décharge le condensateur (C1) dans le circuit de mesure (5), réduisant ainsi la tension du condensateur (Vcl) pratiquement à zéro.

4. Circuit de commande selon la revendication 3, dans lequel le circuit inverseur (2) comprend un transistor (3), sa borne collecteur (4) est couplée au circuit de mesure (5) entre le condensateur (C1) et la résistance (R1), sa base est couplée au moyen récepteur de carte SIM (1), d'une manière telle que sur réception du second signal (Swb) provenant du moyen récepteur de carte SIM (1), le transistor (3) devient conducteur et le condensateur (C1) se décharge à travers le transistor.

5. Circuit de commande selon l'une quelconque des revendications précédentes, comprenant un comparateur de tension (11) dans lequel la tension de sortie du circuit de mesure (5) est comparée à une tension prédéterminée afin de déterminer si oui ou non le dispositif devrait être désactivé.

6. Circuit de commande selon l'une quelconque des revendications précédentes, comprenant un circuit convertisseur tension/temps (12) dans lequel la sortie du circuit de mesure (5) peut être convertie en une mesure de durée correspondant à la durée pendant laquelle la tension d'entrée est interrompue.

7. Circuit de commande selon l'une quelconque des revendications précédentes, dans lequel la limite de durée prédéterminée est située entre 15 secondes et 60 secondes.

8. Circuit de commande selon l'une quelconque des revendications précédentes, dans lequel le premier signal (Swa) ou le second signal (Swb) provenant du moyen récepteur de carte SIM (1) peut être un signal égal à zéro.

9. Téléphone comprenant un circuit de commande selon l'une quelconque des revendications précédentes.

10. Procédé pour déterminer si un dispositif devrait être désactivé comprenant les étapes consistant à :
délivrer un signal de sortie (Vcl) fonction de la durée de toute interruption dans la tension d'entrée au dispositif et un signal provenant d'un moyen de récepteur de carte de Module d'Identité d'Abonné (SIM), le moyen récepteur de carte SIM (1) émettant un premier signal (Swa) lorsqu'une carte SIM est présente et un second signal (Swb) lorsque la carte SIM n'est pas présente, d'une manière telle que le signal de sortie (Vc1) diminue progressivement si la tension d'entrée est interrompue et que la carte SIM est présente et diminue rapidement si la carte SIM n'est pas présente ;
sur l'interruption (t0) de la tension d'entrée au dispositif, permettre au signal de sortie (Vc1) de diminuer ;
sur la restauration (t1) de la tension d'entrée au dispositif, enregistrer l'amplitude du signal de sortie (Vc1) ;
attendre une durée prédéterminée (dt) et enregistrer de nouveau l'amplitude du signal de sortie (Vc1) ;
déterminer la différence des amplitudes des signaux de sortie mesurés ; et
déterminer si oui ou non le dispositif devra être désactivé en fonction de ladite différence d'amplitudes des signaux de sortie.
